# EUROPEAN PATENT SPECIFICATION

(11) **EP 4 075 148 B1**
(45) Date of publication and mention of the grant of the patent: **07.02.2024**
(21) Application number: 22166732.2
(22) Date of filing: 05.04.2022
(51) Int. Cl.: G01P 3/482, G01P 3/56

(54) **SYSTEM AND METHOD FOR DETECTING ROTATIONAL SPEED OF SHAFT FOR A WORK VEHICLE**
SYSTEM UND VERFAHREN ZUM DETEKTIEREN DER DREHZAHL EINER WELLE FÜR EIN ARBEITSFAHRZEUG
SYSTÈME ET PROCÉDÉ DE DÉTECTION DE LA VITESSE DE ROTATION D'ARBRE POUR UN VÉHICULE DE TRAVAIL

(30) Priority: 06.04.2021 IT 202100008510
(43) Date of publication of application: 19.10.2022
(73) Proprietor: CNH Industrial Italia S.p.A., 10156 Torino (IT)
(72) Inventor: Tenneriello, Luigi, 41030 Bomporto (IT)
(74) Representative: CNH Industrial IP Department

(56) References cited:
- WO-A1-96/11407
- DE-C1- 4 014 431
- US-A- 2 692 951
- US-A- 3 012 144
- US-A- 3 358 279

## Description

### TECHNICAL FIELD

The present invention concerns a system and a method for detecting the rotational speed of a work vehicle, in particular an agricultural vehicle.

The present invention finds its preferred, although not exclusive, application in agricultural vehicle such as tractors. Reference will be made to this application by way of example below, being clear that the proposed method and system of the invention may be applied to different typology of work vehicles.

### BACKGROUND OF THE INVENTION

An apparatus for measuring shaft rotation for rotational speed detection is known from US 2 692 951 A.

Work vehicles such as agricultural vehicles needs to detect the rotational speed of shafts of their transmissions to allow the control of their operation.

Such necessity is particularly felt in transmissions wherein such speed is strictly connected to implement operation.

However, usually, shaft in transmissions are enclosed in closed structures and therefore such speed detection is particularly difficult.

Furthermore, it is known that dirty elements, oil leakages and movement of such closed structure may lead to detection error that may lead to imprecision in such measurement.

Moreover, the speed of such shaft may significantly vary from a quasi-static condition to a very variable speed value. Accordingly, not all speed sensor may be efficiently used for detecting such large range of speed values.

Accordingly, existing systems are imprecise and costly.

Therefore, the need is felt to provide a system and a related detection method of rotational speed of shafts that are closed in a workspace and that is compact and economic.

An aim of the present invention is to satisfy the above-mentioned needs in an optimized manner.

### SUMMARY OF THE INVENTION

The aforementioned aim is reached by a system and a method as claimed in the appended set of claims.

### BRIEF DESCRIPTION OF DRAWINGS

For a better understanding the present invention is described in figure 5. Figures 1-4 show examples outside the scope of the present invention. This also applies to the related passages of the description below.
- Figure 1 is a perspective view of an example of a speed detection system not belonging to the invention;
- Figure 2 is an exploded perspective view of an element making part of the system of figure 1;
- Figure 3 is a perspective view of another example of a speed detection system not belonging to the invention;
- Figure 4 is an exploded perspective view of an element making part of the system of figure 3; and
- Figure 5 is a perspective view of the speed detection system according to the invention.

### DETAILED DESCRIPTION OF THE INVENTION

The speed detection system 1 of the present invention essentially comprise a ionizing radiation source 2 configured to emit ionizing radiation such as γ-rays, a ionizing radiation detector 3 configured to detect ionizing radiation, the radiation source 2 is configured to interact with respect to the rotating shaft 5 whose rotational speeds needs to be measured. The measured interaction by the detector is acquired by a control unit (not shown) configured to estimate the speed of the shaft 5 in function of the signal measured by the detector 3.

Source 2 may be selected according to radioactive material properties and requirements of safety of the vehicle. Non-limitative examples may be cobalt (Co-60) or iridium (Ir-192) or cesium (Cs-137).

In particular, the shaft 5 is housed in a casing 6 (only schematic and partially shown) that isolates the shaft 5 from the environment. The shaft 5 is rotatably support with respect to casing 6 to allow its rotation about an axis A. In particular, the casing 6 is made of a material that can be passed through by ionizing radiation emitted by source 2.

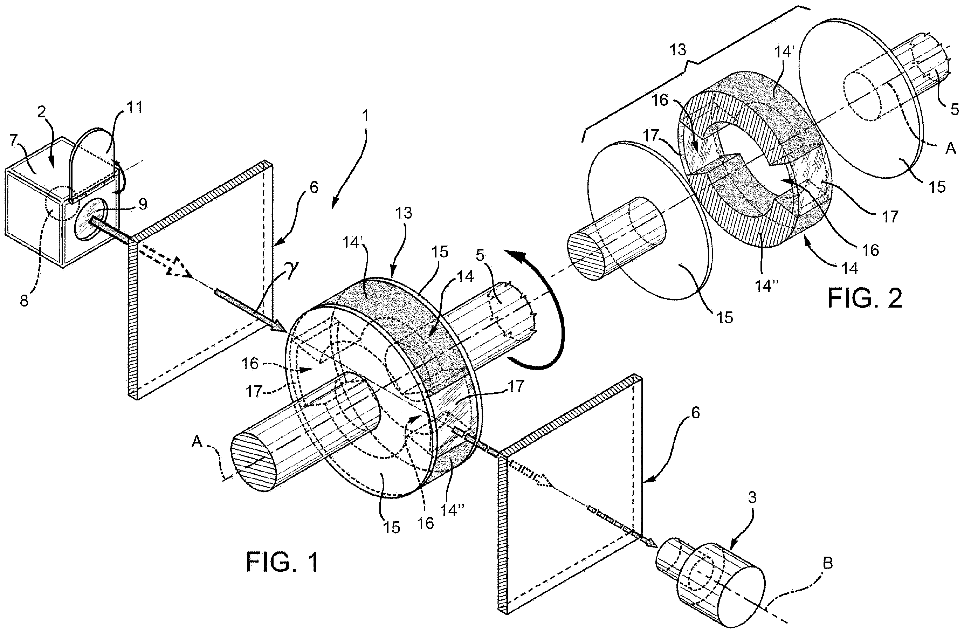

According to the example of figures 1 and 2, the source 2 is carried outside the casing 6, from another element of the vehicle (not shown) or by the casing 6 itself. The source 2 comprises housing 7 configured to delimit a space configured to house a radioactive element 8 configured to emit ionizing radiation γ. The housing 7 is realized in a material configured to avoid the passage of such ionizing radiation γ through casing 7 except for an opening 9 provided by a shutter 11.

Alternatively, the housing 6 can be realized of non-radiologically-shielding material, depending on the intensity of the radiological emission of the source 2.

The shutter 11 is itself realized in a material configured to avoid passage of the ionizing radiation γ and configured to assume a first operative condition wherein it closes the opening 9, thereby avoiding the passage of ionizing radiation γ and a second operative condition wherein it allows the passage of ionizing radiation γ through opening 9.

The casing 7 is disposed with respect to the shaft 5 so that the shutter 11 allows the projection of ionizing radiation γ along a direction B that is transversal with respect to longitudinal axis A of the shaft. Preferably, such direction B is perpendicular to axis A.

The detector 3 is carried outside the casing 6, from another elements of the vehicle (not shown) or by the casing 6 itself. In particular, the detector 3 is placed on an opposite side with respect to housing 6 and collinear to direction B thereby being invested by the ionizing radiation γ in its entirety. The detector 3 may comprise any suitable ionizing radiation sensor and is electrically connected, by wire or electromagnetically, to an electronic control unit (not shown).

The system 1 further comprises a shielding unit 13 fixedly carried by shaft 5 and interposed along direction B thereby being traversed by ionizing radiation γ emitted by source 5.

The shielding unit 13 has material properties that circumferential varies about axis A thereby varying the amount of ionizing radiation γ that may pass through this latter, in particular selectively allowing the passage of the ionizing radiation γ.

In particular, the shielding unit 13 comprises a shielding element 14 that partially surrounds shaft 5 about axis A and that is realized in an ionizing radiation γ shielding material such as lead. In particular the shielding element 14 may be realized in at least a portion.

In the described example, the shielding unit 13 comprises a pair of shielding elements 14', 14" that extends on opposite sides with respect to shaft 5 for a circumferential angular extension about axis B that is lower with respect to 180°. Such pair of shielding elements 14', 14'' are axially compressed between plates 15 that are rigidly carried by shaft 5.

According to the above construction, the shielding unit 13 defines a pair of openings 16 that may be empty or, as in the disclosed example that may house transparent elements 17 with respect to ionizing radiation. Clearly, if the number of shielding elements 14 is different, the number of transparent elements 17 varies consequently.

The operation of the speed detection system 1 of the above-described example is the following.

When it is needed to estimate the speed of shaft 5, a control unit may control shutter 11 to free opening 9 thereby allowing the ionizing radiation γ to be directed against shaft 5 and shielding unit 13. Indeed the ionizing radiation γ passes through casing 6, attenuating itself and hits the shielding unit 13. According to speed rotation, the ionizing radiation γ will be obscured by shielding elements 14', 14" or pass, attenuated, through shaft 5 via openings 16. Then, the ionizing radiation γ will pass out from casing 6, further attenuated, and will be measured by detector 3.

The detector 3 receives therefore impulses with a frequency dependent to rotation of shaft 5 of ionizing radiation γ and this information may be read by control unit that, as known, may determine rotational speed of shaft 5 or that may elaborate such impulse signal to obtain different mathematical paths, e.g. via Fourier transformation. At the end of the measurement, the shutter 9 is closed, to ensure radiological safety to the operators.

When the vehicle no more needs to measure the speed of such shaft 5, source 2 may be removed to the vehicle and stored in a safe space.

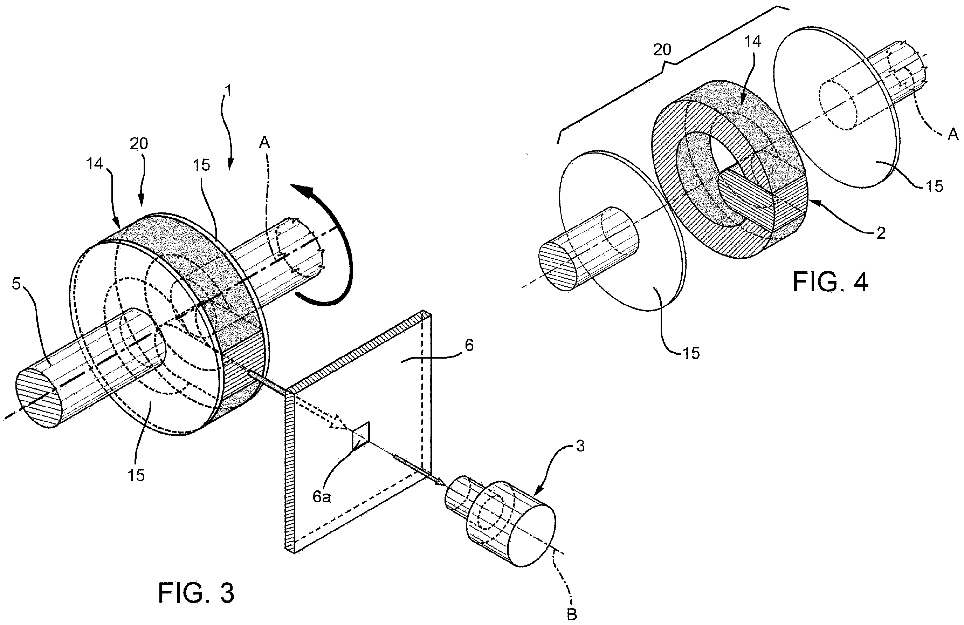

The example of figures 3 and 4 is differentiated by the fact that the radiation source 2 is carried rotatably fixed to shaft 5.

According to the above, the detector 3 is placed outside housing 6, preferably along a direction B as in the example of figures 1 and 2, to detect impulses of ionizing radiation provided by source 2 when rotating about axis A and collinear with direction B.

Advantageously, the housing 6 may be realized in a ionizing radiation shielding material except by a wall of housing 6 interposed between detector 3 and shaft 5 wherein a portion 6a thereof may be realized in a material that has lower ionizing radiation shielding material thereby allowing the passage of radiation coming from source 2 when collinear to direction B.

The source 2 may be advantageously carried by a housing assembly 20 that further comprises a shielding element 14 that at least partially surrounds shaft 5 about axis A and that is realized in an ionizing radiation shielding material such as lead.

In the described example, the housing unit 13 comprises a single shielding element 14 that is "C-shaped", i.e. that circumferentially surrounds shaft 5 about axis B except for a portion occupied by source 2. Accordingly, source 2 is circumferentially fixed between the shielding elements 14 that therefore has a circumferential extension that is greater than 270° about axis A. The shielding element 14 and source 2 are axially compressed between plates 15 that are rigidly carried by shaft 5.

The fixing of source 2 may be obtained by glue, low temperature melting or non-radiologically shielding material also in function of dimensions of the shaft and the estimated work speed, i.e. taking into account the stresses due to centrifugal forces and the environment it shall work in (e.g.: temperature, acidity, etc.).

The operation of the speed detection system 1 of the above-described example is the following.

The ionizing radiation γ is continuously generated by source 2 that rotates about axis A. The ionizing radiation γ may pass through casing 6 via portion a thereby being kept by detector 3.

The detector 3 receives therefore impulses with a frequency dependent to rotation of shaft 5 of ionizing radiation γ and this information may be red by control unit that, as known, may determine rotational speed of shaft 5 or that may elaborate such impulse signal to obtain different mathematical paths, e.g. via Fourier transformation.

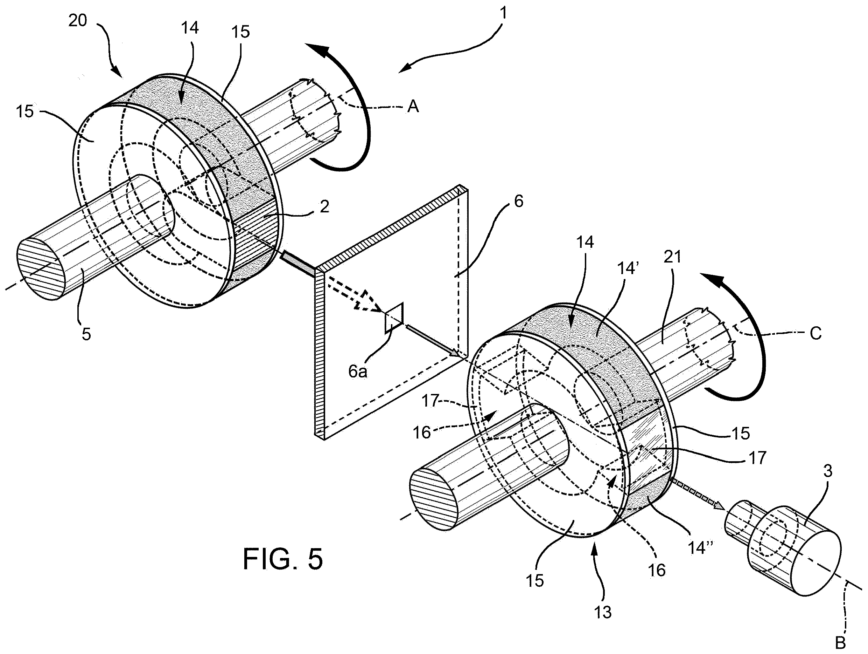

The invention as shown in figure 5 differentiates with respect to the examples of figures 3 and 4 by the presence of an auxiliary shaft 21 outside housing 6 and interposed along direction B of ionizing radiation source between housing 6 and detector 3.

In particular, shaft 21 is a shaft of the vehicle which speed is easily detectable, being outside housing 6 and extends about an axis C that is preferably parallel to axis A. Advantageously, the speed of shaft 21 is controllable by the control unit deputed to detection of signals kept by detector 3.

The shaft 21 is configured to sample the radiation flux before reaching detector 3, as outlined below.

The operation of the speed detection system 1 of the above-described invention is the following.

The ionizing radiation γ is continuously generated by source 2 that rotates about axis A. The ionizing radiation γ may pass through casing 6 via portion a thereby impacting on auxiliary shaft 21.

According to speed rotation of shaft 21, the ionizing radiation γ will be obscured by shielding elements 14', 14" or pass, attenuated, through shaft 21 via openings 16. Then, the ionizing radiation γ will be kept by detector 3.

The detector 3 receives therefore impulses with a frequency dependent to the combination of the rotation of the shaft 5, whose speed is unknown, and the rotation of auxiliary shaft 21 whose speed is known and can be controlled.

The control unit is adapted to vary the speed of auxiliary shaft 21 to minimize the radiation value that is detected by detector 3. In such case, it is assumed that the rotational speed of the two shafts is the same.

It is therefore clear from the above that the present invention furthermore relates to a method for estimating the speed of a shaft as defined in independent method claim 8.

In particular, the interaction may be achieved by providing a flux of ionizing radiation γ against a rotating shaft or by making rotate the source that provides the flux of ionizing radiation γ at the same speed of the shaft.

The method may further comprise the step of sampling the ionizing radiation γ after the interaction with the rotating shaft via an auxiliary shaft that rotates at a variable speed.

In such case, the estimation of speed comprises a minimization step wherein the speed of the auxiliary shaft is varied until the measured ionizing radiation γ is about zero/at a minimum value.

In view of the foregoing, the advantages of the system and method for speed detection of a shaft according to the invention are apparent.

Thanks to the proposed system, it is possible to measure in a safe and precise manner the speed of shafts encased in housings of work vehicles.

In particular, the proposed system allows to measure in a precise manner the speed also in case of vibrations or dirty elements.

Moreover, it is possible to measure a very wide speed range. In particular, it is furthermore possible to measure variable speeds shafts provided by selecting a suitable detector having a sensibility at least ten times greater with respect to speed variation.

When source is not internal to casing enclosing the shaft, it can be removed, thereby reducing radioactive risks.

Thanks to the sampling of the auxiliary shaft, it is possible to measure very low value speed ranges. Accordingly, the system is versatile to detect a wide speed range.

It is clear that modifications can be made to the described system and method for speed detection of a shaft that do not extend beyond the scope of protection defined by the claims.

As said, the source may be of different typology and placed in different location with respect to the shaft or on the shaft itself. Similar consideration is valid for detector.

Moreover, in function of the speed rotation range, the radiation flux may be sampled by more than a single auxiliary shaft.

Furthermore, it is clear that the shielding assembly may be realized in different way and defining one or more openings through which the ionizing radiation may pass without shielding.

## Claims

1. Speed detection system (1) for detecting the speed of a first rotating shaft (5) rotating about a first longitudinal axis (A), said system (1) comprising a ionizing radiation source (2) configured to emit ionizing radiation (γ), a ionizing radiation detector (3) configured to detect impulses of ionizing radiation (γ), said interaction being detected by said ionizing radiation detector (3), said system (1) further comprising a control unit configured to be electrically connected to said ionizing radiation detector (3), said control unit adapted to estimate the speed of said shaft (5) on the basis of the frequency of impulses detected by said ionizing radiation detector (3); wherein the system further comprises an auxiliary shaft (21) provided with shielding assembly (13), interposed between the first rotating shaft (5) provided with a radiation source (2), and said detector (3), wherein said shielding assembly is configured to be fixedly carried by said auxiliary shaft in a position to be traversed by said ionizing radiation (γ), said shielding assembly being realized in a material having material properties that circumferentially vary about the longitudinal axis of said auxiliary shaft, thereby selectively shielding the ionizing radiation (γ) in function of the rotation of said auxiliary shaft; said auxiliary shaft (21) rotating about a second longitudinal axis (C) that is arranged parallel to the first longitudinal axis (A) at a known speed thereby sampling the flux of ionizing radiation (γ), wherein the control unit is adapted to vary the speed of the auxiliary shaft such that the frequency of the impulses detected by the detector is minimized.

2. Speed detection system according to claim 1, wherein said shaft (5) is enclosed in a closed housing (6).

3. Speed detection system according to claim 1 or 2, wherein said ionizing radiation (γ) is a gamma rays radiation.

4. Speed detection system according to any of claims 1 to 3, wherein said source (2) is carried by said rotating shaft (5).

5. Speed detection system according to claim 4, wherein said source (2) is carried radially external to said shaft (5), said shaft (5) being provided a shielding material element (14) that circumferentially surrounds shaft source (2) thereby allowing to provide a flux of ionizing radiation (γ) only in a radial direction.

6. Speed detection system according to any of claims 2 to 5, wherein said housing (6) defines a portion (6a) that has different material properties with respect to the remaining portion of the housing (6) thereby allowing the passage of said flux of ionizing radiation (γ).

7. Speed detection system according to claims 1, 5 or 6, wherein said shielding assembly (13) comprises a shielding element (14) that partially surrounds the shaft (5, 21) about its longitudinal axis (A, C) and that is realized in a ionizing radiation shielding material.

8. Method for estimating the speed of a shaft of a speed detection system according any of the preceding claims, said method comprising the steps of:
• Providing a flux of a ionizing radiation γ from a radiation source;
• Measuring the flux of ionizing radiation γ;
• Providing a control unit arranged to synchronize the speed of the auxiliary shaft to the unknown speed of the first rotating shaft (5) by minimizing the frequency of the impulses detected by the detector (3); and
• Estimating the speed of the shaft in function of the aforementioned measure.

9. Method according to claim 8, further comprising a step of sampling the ionizing radiation γ after the interaction with the auxiliary shaft rotating at a known speed thereby sampling the flux of ionizing radiation (γ), wherein the control unit is adapted to vary the speed of the auxiliary shaft such that the frequency of the impulses detected by the detector is minimized.

10. Method according to claim 9, wherein said speed of the auxiliary shaft is varied until the measured ionizing radiation γ is about zero.

## Patentansprüche

1. Drehzahlerfassungssystem (1) zum Erfassen der Drehzahl einer ersten drehenden Welle (5), die sich um eine erste Längsachse (A) dreht, wobei das System (1) eine Quelle für ionisierende Strahlung (2), die dazu eingerichtet ist, ionisierende Strahlung (γ) zu emittieren, und einen Detektor für ionisierende Strahlung (3) umfasst, der dazu eingerichtet ist, Impulse von ionisierender Strahlung (γ) zu erfassen,
wobei die Wechselwirkung von dem Detektor für ionisierende Strahlung (3) erfasst wird,
wobei das System (1) des Weiteren eine Steuereinrichtung umfasst, die dazu eingerichtet ist, mit dem Detektor für ionisierende Strahlung (3) elektrisch verbunden zu sein, wobei die Steuereinrichtung ausgebildet dazu ist, die Geschwindigkeit der Welle (5) basierend auf der Frequenz von Impulsen zu bestimmen, die von dem Detektor für ionisierende Strahlung (3) erfasst wurden;
wobei das System des Weiteren eine Hilfswelle (21) umfasst, die mit einer Abschirmungsanordnung (13) versehen ist, die zwischen der ersten drehenden Welle (5), die mit einer Quelle für ionisierende Strahlung (2) versehen ist, und dem Detektor (3) angeordnet ist,
wobei die Abschirmungsanordnung dazu eingerichtet ist, von der Hilfswelle in einer Position fest getragen zu werden, die von der ionisierenden Strahlung (γ) durchschritten wird,
wobei die Abschirmungsanordnung aus einem Material ausgeführt ist, das Materialeigenschaften aufweist, die sich in Umfangsrichtung um die Längsachse der Hilfswelle verändern, wodurch die ionisierende Strahlung (γ) in Abhängigkeit von der Drehung der Hilfswelle selektiv abgeschirmt wird;
wobei sich die Hilfswelle (21) mit einer bekannten Drehzahl um eine zweite Längsachse (C) dreht, die parallel zu der ersten Längsachse (A) angeordnet ist, wodurch der Fluss ionisierender Strahlung (γ) abgetastet wird,
wobei die Steuereinrichtung dazu ausgebildet ist, die Drehzahl der Hilfswelle derart zu verändern, dass die Frequenz der Impulse minimiert wird, die von dem Detektor erfasst werden.

2. Drehzahlerfassungssystem nach Anspruch 1, wobei die Welle (5) von einem geschlossenen Gehäuse (6) umgeben ist.

3. Drehzahlerfassungssystem nach Anspruch 1 oder 2, wobei die ionisierende Strahlung (γ) Gammastrahlung ist.

4. Drehzahlerfassungssystem nach einem der Ansprüche 1 bis 3, wobei die Quelle (2) von der drehenden Welle (5) getragen wird.

5. Drehzahlerfassungssystem nach Anspruch 4, wobei die Quelle (2) radial außerhalb der Welle (5) getragen wird, wobei die Welle (5) mit einem Abschirmungsmaterialelement (14) versehen ist, das die Quelle (2) in Umfangsrichtung umgibt, wodurch ermöglicht wird, dass ein Fluss ionisierender Strahlung (γ) nur in einer Radialrichtung bereitgestellt wird.

6. Drehzahlerfassungssystem nach einem der Ansprüche 2 bis 5, wobei das Gehäuse (6) einen Abschnitt (6a) definiert, der bezüglich des übrigen Abschnitts des Gehäuses (6) andere Materialeigenschaften aufweist, wodurch der Durchgang des Flusses ionisierender Strahlung (γ) ermöglicht wird.

7. Drehzahlerfassungssystem nach einem der Ansprüche 1, 5 oder 6, wobei die Abschirmungsanordnung (13) ein Abschirmungselement (14) umfasst, das die Welle (5, 21) um ihre Längsachse (A, C) zum Teil umgibt und das aus einem Material ausgeführt ist, das ionisierende Strahlung abschirmt.

8. Verfahren zum Bestimmen der Drehzahl einer Welle eines Drehzahlerfassungssystems nach einem der vorhergehenden Ansprüche, wobei das Verfahren die Schritte umfasst:
• Bereitstellen eines Flusses ionisierender Strahlung γ von einer Strahlungsquelle;
• Messen des Flusses ionisierender Strahlung γ;
• Bereitstellen einer Steuereinrichtung, die dazu eingerichtet ist, die Drehzahl der Hilfswelle mit der unbekannten Drehzahl der ersten drehenden Welle (5) durch Minimieren der Frequenz von Impulsen zu synchronisieren, die von dem Detektor (3) erfasst werden; und
• Bestimmen der Drehzahl der Welle in Abhängigkeit der vorgenannten Messung.

9. Verfahren nach Anspruch 8, weiterhin umfassend einen Schritt des Abtastens der ionisierenden Strahlung γ nach der Wechselwirkung mit der Hilfswelle, die sich mit einer bekannten Drehzahl dreht, wodurch der Fluss ionisierender Strahlung (γ) abgetastet wird,
wobei die Steuereinrichtung dazu eingerichtet ist, die Drehzahl der Hilfswelle derart zu verändern, dass die Frequenz der Impulse minimiert wird, die von dem Detektor erfasst werden.

10. Verfahren nach Anspruch 9, wobei die Drehzahl der Hilfswelle verändert wird, bis die gemessene ionisierende Strahlung γ etwa Null beträgt.

## Revendications

1. Système de détection de la vitesse (1) pour détecter la vitesse d'un premier arbre rotatif (5) tournant autour d'un premier axe longitudinal (A), ledit système (1) comprenant une source de rayonnement ionisant (2) configurée pour émettre un rayonnement ionisant (γ), un détecteur de rayonnement ionisant (3) configuré pour détecter des impulsions de rayonnement ionisant (y), ladite interaction étant détectée par ledit détecteur de rayonnement ionisant (3), ledit système (1) comprenant en outre une unité de commande configurée pour être connectée électriquement audit détecteur de rayonnement ionisant (3), ladite unité de commande étant adaptée pour estimer la vitesse dudit arbre (5) sur la base de la fréquence des impulsions détectées par ledit détecteur de rayonnement ionisant (3) ;
dans lequel le système comprend en outre un arbre auxiliaire (21) équipé d'un ensemble de blindage (13), interposé entre le premier arbre rotatif (5) équipé d'une source de rayonnement (2) et ledit détecteur (3), dans lequel ledit ensemble de blindage est configuré pour être porté de manière fixe par ledit arbre auxiliaire dans une position devant être traversée par ledit rayonnement ionisant (γ), ledit ensemble de blindage étant réalisé dans un matériau dont les propriétés varient de manière circonférentielle autour de l'axe longitudinal dudit arbre auxiliaire, protégeant ainsi sélectivement le rayonnement ionisant (y) en fonction de la rotation dudit arbre auxiliaire ;
ledit arbre auxiliaire (21) tournant autour d'un second axe longitudinal (C) qui est parallèle au premier axe longitudinal (A) à une vitesse connue, échantillonnant ainsi le flux de rayonnement ionisant (γ), l'unité de commande étant adaptée pour faire varier la vitesse de l'arbre auxiliaire de manière à minimiser la fréquence des impulsions détectées par le détecteur.

2. Système de détection de la vitesse selon la revendication 1, dans lequel ledit arbre (5) est enfermé dans un boîtier fermé (6).

3. Système de détection de la vitesse selon la revendication 1 ou 2, dans lequel ledit rayonnement ionisant (γ) est un rayonnement de rayons gamma.

4. Système de détection de la vitesse selon l'une quelconque des revendications 1 à 3, dans lequel ladite source (2) est portée par ledit arbre rotatif (5).

5. Système de détection de la vitesse selon la revendication 4, dans lequel ladite source (2) est portée de manière radiale à l'extérieur dudit arbre (5), ledit arbre (5) étant pourvu d'un élément de matériau de blindage (14) qui entoure de manière circonférentielle la source de l'arbre (2), ce qui permet de fournir un flux de rayonnement ionisant (γ) uniquement dans un sens radial.

6. Système de détection de la vitesse selon l'une quelconque des revendications 2 à 5, dans lequel ledit boîtier (6) dispose d'une partie définie (6a) dont les propriétés matérielles diffèrent de celles du reste du boîtier (6), permettant ainsi le passage dudit flux de rayonnement ionisant (γ).

7. Système de détection de la vitesse selon les revendications 1, 5 ou 6, dans lequel ledit assemblage de blindage (13) comprend un élément de blindage (14) qui entoure partiellement l'arbre (5, 21) autour de son axe longitudinal (A, C) et qui est réalisé dans un matériau de blindage contre les rayonnements ionisants.

8. Procédé d'estimation de la vitesse d'un arbre d'un système de détection de la vitesse selon l'une quelconque des revendications précédentes, ledit procédé comprenant les étapes suivantes :
• Fournir un flux de rayonnement ionisant γ à partir d'une source de rayonnement ;
• Mesurer le flux de rayonnement ionisant γ ;
• Fournir une unité de commande conçue pour synchroniser la vitesse de l'arbre auxiliaire avec la vitesse inconnue du premier arbre rotatif (5) en minimisant la fréquence des impulsions détectées par le détecteur (3) ;
• Estimer la vitesse de l'arbre en fonction de la mesure susmentionnée.

9. Procédé selon l'une des revendications 1 à 8, comprenant en outre une étape d'échantillonnage du rayonnement ionisant γ après l'interaction avec l'arbre auxiliaire tournant à une vitesse connue, en échantillonnant dès lors le flux de rayonnement ionisant (γ), dans lequel l'unité de commande est adaptée pour modifier la vitesse de l'arbre auxiliaire de manière à minimiser la fréquence des impulsions détectées par le détecteur.

10. >Procédé selon la revendication 9, dans lequel ladite vitesse de l'arbre auxiliaire est modifiée jusqu'à ce que le rayonnement ionisant mesuré γ soit à peu près nul
